Europäisches Patentamt

European Patent Office

Office européen des brevets

(11) Publication number: **0 128 544**
**B1**

# EUROPEAN PATENT SPECIFICATION

(45) Date of publication of patent specification: **14.01.87**

(51) Int. Cl.⁴: **B 25 J 17/02**

(21) Application number: **84106542.8**

(22) Date of filing: **07.06.84**

(54) **A joint structure between link members primarily of an industrial robot arm.**

(30) Priority: **08.06.83 JP 103026/83**

(43) Date of publication of application:
**19.12.84 Bulletin 84/51**

(45) Publication of the grant of the patent:
**14.01.87 Bulletin 87/03**

(84) Designated Contracting States:
**DE FR GB IT NL**

(56) References cited:
**EP-A-0 048 905**

**PATENT ABSTRACTS OF JAPAN, unexamined
applications, Section M, vol. 1, no. 23, March
25, 1977, The Patent Office Japanese
Government, page 1820 M76**

(73) Proprietor: **SUMITOMO ELECTRIC INDUSTRIES
LIMITED
No. 15, Kitahama 5-chome Higashi-ku
Osaka-shi Osaka 541 (JP)**

(72) Inventor: **Takemoto, Akira
11-7, Harayamadai 4-chome
Sakai-shi Osaka (JP)**

(74) Representative: **Kuhnen, Wacker & Partner
Schneggstrasse 3-5 Postfach 1729
D-8050 Freising (DE)**

## Description

The present invention relates to a joint structure between link members of an arm preferably of an industrial robot, according to the opening part of claim 1. This kind of structure is known e.g. from the JP, Kokai No. 51-137264.

When two adjacent link members are joined by means of a joint structure having one predetermined axis of rotation so that the two link members can only be articulated around said common axis within one predetermined plane, such joint structure is regarded to have only one degree of freedom with respect to movement. For instance, the human elbow allows to bend about 90 degrees within one plane, while the human wrist allows articulation of the human hand more freely, i.e. in articulations having components in two planes perpendicular to each other. Thus, the elbow may be considered as a joint with one degree of freedom, and the wrist as a joint with two degrees of freedom. In the latter case, such joint allows the link members connected by such joint, i.e. the forearm and the hand in this example, to move freely and independently around such joint having two degrees of freedom as described.

Such effect may also be achieved by arranging in series a plurality of at least two joint structures having only one degree of freedom. However, there is also a need for manipulators or the like having wrist-like structures with two degrees of freedom in order to allow to reduce the number of joint structures to a minimum, to allow work within a restricted space, and also to increase working accuracy and performance. When movements with two degrees of freedom are required, a driving motor may be installed on each of the neighbouring link members as shown in the periodical publication "Nikkei Mechanical" p. 57/58 of December 20, 1982. As shown there, driving means, holding means and eventually velocity regulation means are placed on the distal side of the joint structure requiring space and having weight there. This inevitably leads to an increase in arm length and weight of the manipulator at a place neighboouring its distal end. Long and heavy manipulator arms, however, have obvious adverse effects on the working accuracy and preciseness achieved, and are not suited for work under restricted space conditions.

It is, therefore, an object of the present invention to provide a joint structure of the type as defined in the preamble of claim 1 that allows for operation with two degrees of freedom in articulating movement while avoiding increased arm length and accumulation of weight near the distal end of the arm or similar structure.

This object is achieved by the characterizing features of claim 1.

With the arrangement claimed, the drive means or drive motors may be concentrated on one side of the joint structure where such weight has least detrimental effect. In case of a robot arm, such concentration of weight may be provided at the proximal side of the joint structure to minimize bending stresses within the joint structure and within all the arm members. Also, the link member not equipped with such drive means may be utilized in its full length for operation thus allowing operation also in restricted spaces. As a whole, there is achieved an increase in preciseness and versatility of operation.

The subclaims contain further improvements of the teaching of claim 1.

Additional details, advantages and features of the invention will become apparent from the following description of a preferred embodiment with the aid of the accompanying drawings.

In the drawings

Fig. 1 shows an elevational view of the joint structure of the present invention,

Fig. 2 shows an elevational view from the direction of arrow A in Fig. 1,

Fig. 3 shows an end view from the direction of arrow B in Fig. 1,

Fig. 4 repeats the view of Fig. 2, however with parts broken away to reveal the inside structure of the joint structure,

Fig. 5 repeats the view of Fig. 3, however with parts broken away to show the inside structure of the joint structure.

In the drawings, which have to be considered as schematically simplified for the sake of clarity, a first link member 1 is connected to a second link member 2 via a connecting frame structure 3. In the embodiment as selected, link member 1 may be considered a member of an arm like the forearm, whereas connecting frame structure 3 is to operate like a wrist, and link member 2 forming the distal end of the joint structure may be considered like a root portion of the palm of a human hand.

A suitable handling or operating device may be fixed to link member 2 e.g. for grasping objects, holding devices like spray-guns or the like.

The first link member 1 is connected to the connecting frame structure 3 via a shaft 6 being rotatably mounted within connecting frame structure 3 and drivingly connected with connecting frame structure 3 via a decelerator 4 as described in more detail hereinafter. If connecting frame structure 3 is considered stationary, link member 1 may articulate around the centerline of shaft 6 so that there is one degree of freedom between link member 1 and connecting frame structure 3.

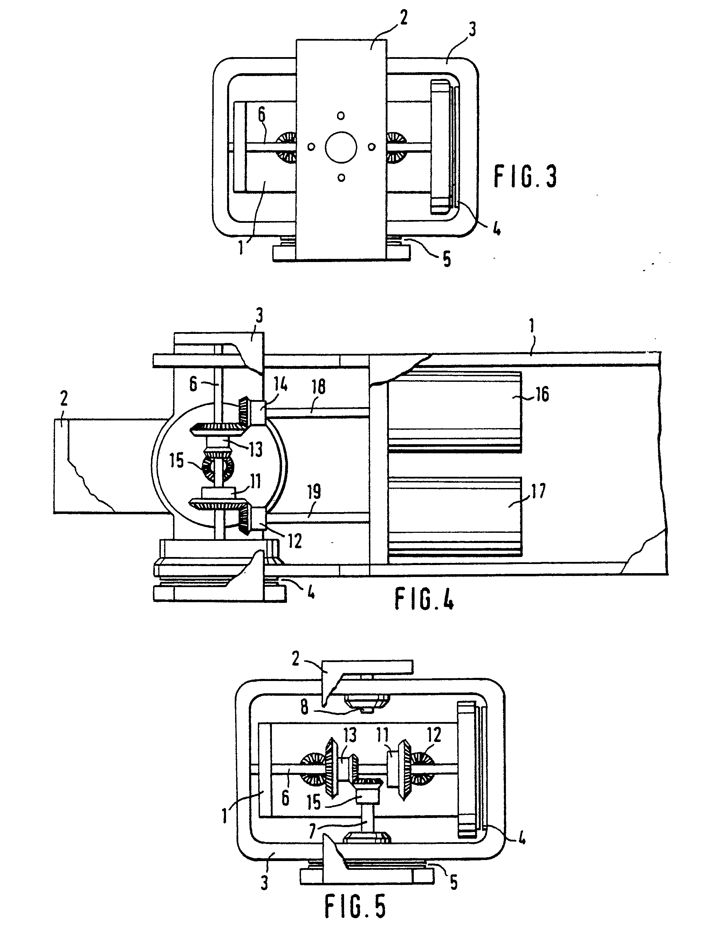

Link member 2 is, as can be seen in more detail from Fig. 5, rotatably connected to connecting frame structure 3 via a shaft 7 on one side of shaft 6 and an axle 8 on the other side of shaft 6, shaft 7 and axle 8 having a common centerline. While axle 8 provides for idle rotation, shaft 7 is coupled to link member 2 via a decelerator 5, as described in more detail hereinafter. The centerlines of shaft 6 on the one hand and shaft 7 and axle 8 on the other hand are, in the example shown, perpendicular to each other, and cross or meet each other in one common point. While shaft 6 is a unitary member journalled, as can be seen in Fig. 5, in opposite lateral walls of connecting frame structure 3, shaft 7 extends only from its mounting wall of connecting frame structure 3 to a place near shaft 6, whereas axle 8 is arranged in the wall of connecting frame structure 3 opposite the wall mounting shaft 7. This arrangement allows full crossing or meeting of the centerlines as described before without physical interference of shaft 7 or axle 8 with shaft 6.

Shaft 7 and axle 8 having a common centerline provide for an articulation of link member 2 with respect to connecting frame structure 3 with one degree of freedom around an axis being different, in the embodiment shown perpendicular, to the axis of shaft 6, i.e. the axis of articulation between connecting frame structure 3 and link 1. This allows two degrees of freedom, i.e. free and independent articulation in all directions between link members 1 and 2 in response to any appropriate drive of shafts 6 and 7. With shafts 6 and 7 idling, of course, any desired articulation between link members 1 and 2 could also be adjusted by external forces, if so desired.

To positively drive shafts 6 and 7 to allow use of the joint structure e.g. for a robot arm, drive means or drive motors 16 and 17 are provided on only one side of connecting frame structure 3, in the example shown within link member 1 being considered at the proximal side of the joint structure of a robot arm.

Drive motor 17 drives, via drive shaft 19, a bevelled gear wheel 12 meshing with a bevelled gear wheel 11 keyed on shaft 6. Therefore, drive motor 17 drives shaft 6 which in turn via decelerator 4 drives connecting frame structure 3 in an articulating movement with respect to link member 1 around the center line of shaft 6.

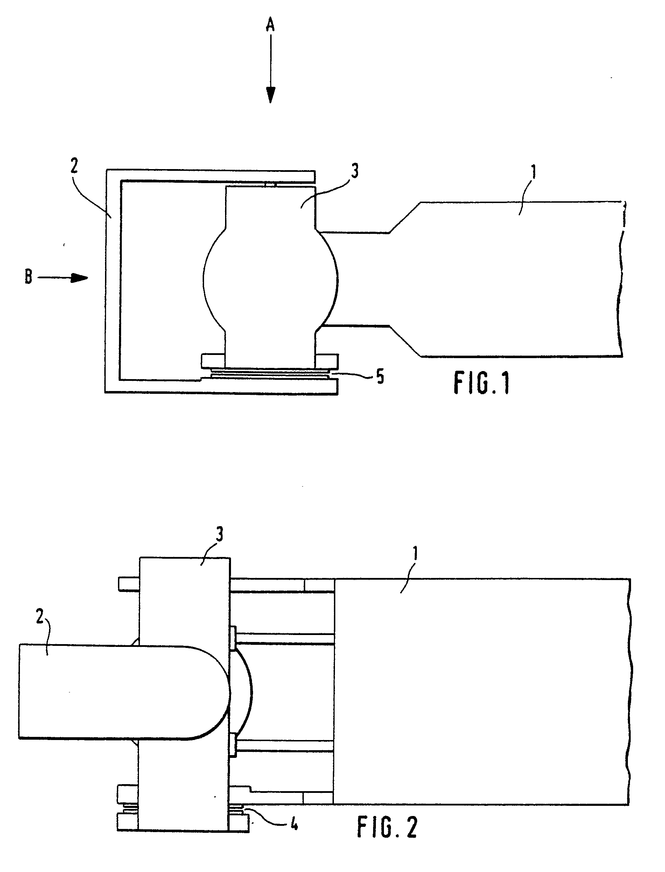

Drive motor 16 via drive shaft 18 drives a bevelled gear-wheel 14 meshing with a bevelled gear 13 idling on shaft 6. Gear-wheel 13 having additional bevel gear teeth also meshes with bevelled gear wheel 15 keyed on shaft 7. Therefore, drive motor 16, independently of any rotational movement of shaft 6, drives shaft 7, which in turn, via decelerator 5, drives link member 2 in an articulating movement with respect to connecting frame structure 3 around the centerline of shaft 7 and axle 8. With link member 1 being considered stationary, drive 17 therefore provides, as viewed in Fig. 2, for a tilting movement up and down of connecting frame member 3, whereas motor 16 provides for a horizontal articulation of link member 2 in any tilted position of connecting frame member 3 thus allowing link member 2 to assume any desired articulated or inclined position with respect to link member 1.

As such movement of connecting frame member 3 with respect to link member 1 and of link member 2 with respect to connecting frame member 3 usually is needed at rather low speed, but with high torque, decelerators 4 and 5 are used to transduce low torque, high velocity rotation of shafts 6 and 7 into high torque, low velocity articulating movements of connecting frame member 3 and link member 2, respectively, link member 1 being considered stationary in this example. Low torque at shafts 6 and 7 reduces necessary performance and wear of the meshing gear-wheels and allows for standard light-weight drive motors 16 and 17 e.g. in the form of electric motors.

As the foregoing description shows, a joint structure of the present invention offers primarily the following decisive advantages:

A. Design of a light weight link member 2 used for manipulation without a drive motor becomes possible since the adjacent link member 1 considered to be at the proximal side of the joint structure can take up and carry all drive means or drive motors 16 and 17, including the drive motor 16 for the manipulation link member 2.

B. Design of a compact hand-elbow architecture is achieved by making the manipulation link member 2 small and by reducing the distance between the arm portions corresponding to hand and elbow.

C. Velocity of movement of the link members 1 and 2 around the joint structure (now considering connecting frame structure 3 as stationary) can be precisely controlled or adjusted by utilizing the decelerators 4 and 5 being preferably in the form of harmonic-drive decelerators with high degree of reduction ratio of input velocity vs. output velocity, and positively coupling the drive shaft 6 and 7, respectively, with the connecting frame structure 3 or the link member 2, respectively.

## Claims

1. A joint structure between link members (1, 2) primarily of a robot arm, a first one (1) of said link members (1, 2) being connected to a second one (2) via a connecting frame structure (3) allowing two degrees of freedom in movement between said link members (1, 2), the relative movement of said link members (1, 2) being driven by individual drive means or motors (16, 17), characterized in

— that within said connecting frame structure (3) are provided two shafts (6, 7) the centerlines of which cross or meet each other in a common point forming the center of articulation with two degrees of freedom between said link members (1, 2),

— that a first one (6) of said shafts (6, 7) carries two gear-wheels (11, 13), one of them being fixed or keyed to said first shaft (6) for rotating said first shaft (6) when driven by the associated one (17) of said drive means or motors (16, 17), and the other one (13) idling on said first shaft (6) and meshing with a gear-wheel (15) fixed or keyed to a second one of said shafts (7) so as to rotate said second shaft (7) when driven by the associated one (16) of said drive means or motors (16, 17) via said other gear-wheel (13), and

— that said drive means or motors (16, 17) are arranged on the same side — either the side of said first link member (1) or of said second link member (2) — of said first shaft (6).

2. The joint structure according to claim 1, characterized in that said drive means or motors (16, 17) in case of a robot arm or manipulator are arranged at the proximal side of said first shaft (6).

3. The joint structure according to claim 1 or 2, characterized in that said drive means or motors (16, 17) are arranged in parallel with the centerlines of their output shafts (18, 19) crossing or meeting the centerline of said first shaft (6), said gear-wheels (11, 13) on said first shaft (6) and driving gear wheels (12, 14) fixed or keyed to said output shafts (18, 19) preferably being bevel gears.

4. The joint structure according to any one of claims 1 through 3, characterized in that decelerators (4, 5) are provided between said shafts (6, 7) and the elements driven by said shafts (6, 7), i.e. said connecting frame structure (3) and said second link member (2), respectively.

5. The joint structure of claim 4, characterized in that said decelerators (4, 5) allow positive drive between said drive means or motors (16, 17) and said driven elements.

## Patentansprüche

1. Gelenkanordnung zwischen Verbindungsteilen (1, 2), insbesondere für einen Roboterarm, wobei ein erstes (1) der Verbindungssteile (1, 2) mit einem zweiten (2) über einen Verbindungsrahmen (3) verbunden ist, der zwischen den Verbindungsteilen (1, 2) zwei Freiheitsgrade der Bewegung erlaubt, und wobei die Relativbewegung der Verbindungsteile (1, 2) durch individuelle Antriebsmittel oder Motoren (16, 17) erzeugt wird, dadurch gekennzeichnet, daß innerhalb des Verbindungsrahmens (3) zwei Wellen (6, 7) angeordnet sind, deren Mittenlängsachsen sich in einem gemeinsamen Punkt kreuzen oder treffen, welcher den Schwenkmittelpunkt mit zwei Freiheitsgraden zwischen den Verbindungsteilen (1, 2) bildet, daß eine erste (6) der Wellen (6, 7) zwei Zahnräder (11, 13) trägt, von denen eines an der ersten Welle (6) befestigt oder auf diesem aufgekeilt ist, um die erste Welle (6) zu drehen, wenn durch den zugehörigen (17) der Antriebsmittel oder Motoren (16, 17) ein Antrieb erfolgt, und von denen das andere (13) auf der erster Welle (6) frei läuft und mit einem Zahnrad (15) kämmt, das auf der zweiten der Wellen (7) befestigt oder auf diesem aufgekeilt ist, um die zweite Welle (7) zu drehen, wenn durch den zugehörigen (16) der Antriebsmittel oder Motoren (16, 17) über das andere Zahnrad (13) ein Antrieb erfolgt; und daß die Antriebsmitel oder Motoren (16, 17) auf der gleichen Seite der ersten Welle (6) — entweder auf der Seite des ersten Verbindungsteils (1) oder auf der des zweiten Verbindungsteils (2) — angeordnet sind.

2. Gelenkanordnung nach Anspruch 1, dadurch gekennzeichnet, daß die Antriebsmittel oder Motoren (16, 17) im Falle eines Roboterarms oder Manipulators auf der proximalen Seite der ersten Welle (6) angeordnet sind.

3. Gelenkanordnung nach Anspruch 1 oder 2, dadurch gekennzeichnet, daß die Antriebsmittel oder Motoren (16, 17) zueinander parallel angeordnet sind, wobei sich die Mittenlängsachsen ihrer Abtriebswellen (18, 19) in der Mittenlängsachse der erster Welle (6) kreuzen oder treffen, wobei die Zahnräder (11, 13) an der ersten Welle (6) und Antriebszahnräder (12, 14), welche an den Abtriebswellen (18, 19) befestigt oder an diesen aufgekeilt sind vorzugsweise Kegelzahnräder sind.

4. Gelenkanordnung nach einem der Ansprüche 1—3, dadurch gekennzeichnet, daß Hemmkörper (4, 5) zwischen den Wellen (6, 7) und den von den Wellen (6, 7) angetriebenen Elementen, d.h. dem Verbindungsrahmen (3) bzw. dem zweiten Verbindungsteil.(2) angeordnet sind.

5. Gelenkanordnung nach Anspruch 4, dadurch gekennzeichnet, daß die Hemmkörper (4, 5) zwischen den Antriebsmitteln oder Motoren (16, 17) und den angetriebenen Elementen einen zwangläufigen Antrieb ermöglichen.

## Revendications

1. Structure de joint reliant des éléments (1, 2), notamment des éléments d'un bras de robot, un premier (1) desdits éléments (1, 2) étant relié à un deuxième élément (2) par l'intermédiaire d'une structure de cadre de liaison (3) qui permet deux degrés de liberté de mouvement entre lesdits éléments (1, 2), le mouvement relatif desdits éléments (1, 2) étant entraîne par des moyens ou moteurs d'entraînement individuels (16, 17), caractérisé en ce que

à l'intérieur de ladite structure de cadre de liaison (3), sont prévus deux arbres (6, 7) dont les axes se croisent ou se rejoignent en un point commun qui forme le centre d'une articulation à deux degrés de liberté entre les éléments (1, 2),

un premier (6) desdits arbres (6, 7) porte deux roues dentées (11, 13) dont l'une est fixée ou clavetée audit premier arbre (6) pour faire tourner ledit premier arbre (6) lorsqu'il est entraîné par celui (17) desdits moyens ou moteurs d'entraînement (16, 17) qui lui est associé, et l'autre (13) étant monté fou sur ledit premier arbre (6) et engrenant avec une roue dentée (15) fixée ou clavetée sur un deuxième (7) desdits arbres, de façon à faire tourner ledit deuxième arbre (7) lorsqu'il est entraîné par celui (16) desdits moyens ou moteurs d'entraînement (16, 17) qui lui est associé, par l'intermédiaire de ladite autre roue dentée (13), et

lesdits moyens ou moteurs d'entraînement (16, 17) sont agencés sur le même côté (soit le côté du premier élément (1), soit celui du deuxième élément (2), dudit premier arbre (6).

2. Structure de joint selon la revendication 1, caractérisée en ce que lesdits moyens ou moteurs d'entraînement (16, 17) sont disposés sur le côté proximal dudit premier arbre (6) dans le cas d'un bras de robot ou d'un manipulateur.

3. Structure de joint selon la revendication 1 ou la revendication 2, caractérisée en ce que lesdits moyens ou moteurs d'entraînement (16, 17) sont disposés parallèlement, de façon que les axes de leurs arbres de sortie (18, 19) croisent ou rejoignent l'axe dudit premier arbre (6), lesdites roues dentées (11, 13) montées sur ledit premier arbre (6) et lesdites roues dentées motrices (12, 14) qui sont fixées ou clavetées sur lesdits arbres de sortie (18, 19) étant de préférence des roues dentées coniques.

4. Structure de joint selon l'une quelconque des revendications 1 à 3, caractérisée en ce que des réducteurs (4, 5) sont prévus entre lesdits arbres (6, 7) et les éléments entraînés par lesdits arbres (6, 7), c'est-à-dire, ladite structure de cadre de liaison (3) et ledit deuxième élément (2) respectivement.

5. Structure de joint selon la revendication 4, caractérisée en ce que lesdits réducteurs (4, 5) permettent un entraînement positif entre lesdits moyens ou moteurs entraînement (16, 17) et lesdits éléments entraînés.

# 0 128 544

FIG.1

FIG.2

FIG.3

FIG.4

FIG.5